(19) Europäisches Patentamt
European Patent Office
Office européen des brevets

(11) Veröffentlichungsnummer : **0 024 677**
**B1**

(12) # EUROPÄISCHE PATENTSCHRIFT

(45) Veröffentlichungstag der Patentschrift : **22.09.82**

(51) Int. Cl.[3] : **C 09 B 47/26**, D 06 P 1/14

(21) Anmeldenummer : **80104926.3**

(22) Anmeldetag : **19.08.80**

(54) **Wasserlösliche Phthalocyaninverbindungen, Verfahren zu ihrer Herstellung und ihre Verwendung als Farbstoffe.**

(30) Priorität : **24.08.79 DE 2934248**

(43) Veröffentlichungstag der Anmeldung : **11.03.81 (Patentblatt 81/10)**

(45) Bekanntmachung des Hinweises auf die Patenterteilung : **22.09.82 Patentblatt 82/38**

(84) Benannte Vertragsstaaten : **BE CH DE FR GB IT LI**

(56) Entgegenhaltungen :
**DE A 1 928 677**
**DE A 2 021 257**
**DE A 2 128 326**
**GB A 1 265 842**

(73) Patentinhaber : **HOECHST AKTIENGESELLSCHAFT**
**Postfach 80 03 20**
**D-6230 Frankfurt/Main 80 (DE)**

(72) Erfinder : **Springer, Hartmut, Dr.**
**Am Erdbeerstein 27**
**D-6240 Königstein/Taunus (DE)**

EP 0 024 677 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Imprimerie Jouve, 18, rue St-Denis, 75001 Paris, France

# Wasserlösliche Phthalocyaninverbindungen, Verfahren zu ihrer Herstellung und ihre Verwendung als Farbstoffe

Es sind beispielsweise aus der deutschen Patentschrift 696 591 Sulfonamidgruppen enthaltende Phthalocyaninfarbstoffe bekannt, die man in der Weise herstellen kann, daß man Phthalocyaninsulfochloride mit Ammoniak, primären oder sekundären aliphatischen oder aromatischen Aminen umsetzt. Entsprechende Abkömmlinge mit heterocyclischen Resten sind ebenso bereits beschrieben (S. US-PS 2 459 771), die durch Umsetzung von Phthalocyaninsulfochloriden mit heterocyclischen Aminen hergestellt werden. Diese Phthalocyaninsulfonamide sind, wenn alle Sulfochloridgruppen in Sulfonamidgruppen umgewandelt wurden, neutral in Wasser nicht löslich und lösen sich darin, sofern sie sich von Ammoniak oder primären Aminen ableiten, nur unter Alkalizusatz. Sie sind als Farbstoffe demgemäß nur aus stark alkalischem Bad anwendbar.

Weiterhin sind aus der deutschen Patentschrift 868 035, der britischen Patentschrift 1 046 520, der deutschen Offenlegungsschrift 1 928 677 und der US-Patentschrift 2 459 773 mehr oder weniger wasserlösliche Phthalocyaninsulfonamide bekannt, die sich zum Direktfärben cellulosehaltiger Materialien eignen. Sie können durch partielle Umsetzung von phthalocyaninsulfochloriden mit Ammoniak und/oder aliphatischen Aminen hergestellt werden, wobei die nicht reagierenden Sulfochloridgruppen gleichzeitig oder anschließend hydrolysiert werden. Die Wasserlöslichkeit dieser Phthalocyaninsulfonamide ist, obschon für die Praxis in manchen Fällen ausreichend, im allgemeinen verbesserungsbedürftig, da die Zahl der löslichmachenden Sulfogruppen naturgemäß begrenzt ist.

Es wurden nunmehr interessante, neue, Sulfonamidgruppen enthaltende und sehr gut wasserlösliche, als Farbstoffe von hoher Qualität verwendbare Phthalocyaninverbindungen gefunden, die die oben beschriebenen Nachteile nicht aufweisen ; ihre Wasserlöslichkeit ist nicht an das Vorhandensein von Sulfogruppen gebunden.

Die neuen Phthalocyaninverbindungen besitzen in saurer Form und in Form ihrer Salze die allgemeine Formel (1)

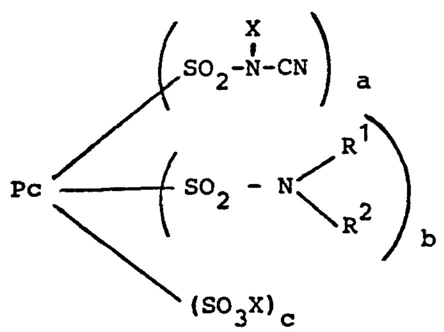

(1)

in welcher bedeuten :

Pc ist der Rest des metallfreien oder eines metallhaltigen Phthalocyanins, wie beispielsweise des Kupfer-Kobalt- oder Nickelphthalocyanins, wobei der Phthalocyaninrest noch in den 3- und/oder 4-Stellungen der carbocyclischen aromatischen Ringe des Phthalocyanins substituiert sein kann, wie beispielsweise durch Halogenatome, wie Chloratome, oder Arylreste, wie Phenylreste, und in welchem die Sulfonylcyanamid-, Sulfonamid- und/oder Sulfonsäure-Gruppen in den 3- und/oder 4-Stellungen der carbocyclischen aromatischen Ringe des Phthalocyanins gebunden sind ;

X ist Wasserstoff oder Ammonium oder das Äquivalent eines ein-, zwei- oder drei-wertigen Metalls, vorzugsweise des Natriums oder Kaliums ;

$R^1$ und $R^2$ bedeuten jedes ein Wasserstoffatom oder eine niedere Alkylgruppe, die substituiert sein kann, oder einen Arylrest, der substituiert sein kann, wobei $R^1$ und $R^2$ gleich oder verschieden voneinander sein können, oder

$R^1$ und $R^2$ bilden gemeinsam mit dem Stickstoffatom und einem Alkylenrest von 3 bis 8 C-Atomen, bevorzugt 4 bis 6 C-Atomen, oder mit einem weiteren Heteroatom, wie einem Stickstoffatom oder einem Sauerstoffatom, und zwei niederen Alkylenresten einen heterocyclischen Ring, wie beispielsweise den Piperidin-, Piperazin oder Morpholinring ;

a ist eine ganze oder gebrochene Zahl von 1 bis 4 ;

b ist eine ganze oder gebrochene Zahl von Null bis 3 ;

c ist eine ganze oder gebrochene Zahl von Null bis 3,

wobei a, b und c gleich oder verschieden voneinander sein können, jedoch die Summe von (a + b + c) gleich 1 bis 4 ist.

Die neuen Verbindungen der Formel (1) sind, wenn X für ein Wasserstoffatom steht, auch im Falle von c = Null saure Verbindungen, da der Aminorest in der Sulfonylcyanamidgruppierung so stark polarisiert ist, daß das Wasserstoffatom der Aminogruppe als Proton reagiert und leicht durch andere salzbildende Kationen, wie Natrium-, Kalium- und Ammoniumionen, austauschbar ist.

Die Verbindungen der allgemeinen Formel (1) werden in der Regel in Form von Gemischen der Einzelverbindungen der Formel (1) erhalten, wobei diese Einzelverbindungen sich voneinander durch den Substitutionsgrad der mit den Indices a, b und c bezeichneten Reste unterscheiden, weswegen bei Aufstellung der Formel des erhaltenen Verfahrensproduktes der Formel (1) die Indices a, b und c in der Regel gebrochene Zahlen darstellen.

Die im vorhergehenden und im nachfolgenden benutzte Angabe « niedere » bedeutet, daß die damit bezeichneten Gruppen Alkylreste oder

Alkylenreste von 1 bis 4 C-Atomen enthalten bzw. daraus bestehen. Die aliphatischen Reste und die Arylreste der Formelglieder $R^1$ und $R^2$ können, wie angegeben, Substituenten enthalten. Bei den Alkylresten, bevorzugt niedere Alkylgruppen, sind die Substituenten bevorzugt Hydroxy, Sulfo, Carboxy und Phenyl, wobei diese Alkylreste, falls substituiert, bevorzugt 1 oder 2 solche Substituenten enthalten. Arylreste sind bevorzugt Phenylreste, die vorzugsweise durch 1 oder 2 Substituenten aus der Gruppe Methyl, Chlor, Carboxy und Sulfo substituiert sein können.

Die neuen Verbindungen der allgemeinen Formel (1) werden erfindungsgemäß hergestellt, indem man Phthalocyaninsulfonsäurechloride der allgemeinen Formel (2)

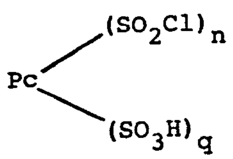

(2),

in welcher Pc die obengenannte Bedeutung hat und die Sulfochlorid- und Sulfogruppen in den 3- und/oder 4-Stellungen der carboxyclischen aromatischen Ringe des Phthalocyanins gebunden sind, n eine Zahl von 1 bis 4 und q eine Zahl von Null bis 3 ist, wobei die Summe von (n + q) gleich 1 bis 4 ist, mit Cyanamid oder mit Cyanamid und einem Amin der allgemeinen Formel (3)

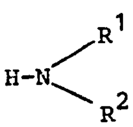

(3)

in welcher $R^1$ und $R^2$ die oben genannten Bedeutungen haben, gleichzeitig oder in beliebiger Reihenfolge in wäßrigem Medium oder in einem organischen Lösungsmittel, das vorzugsweise mit Wasser mischbar ist, oder in einem Gemisch derselben bei einem pH-Wert von 4 bis 14, vorzugsweise von 9 bis 14, und bei einer Temperatur zwischen − 10 °C und + 110 °C, vorzugsweise zwischen 0 °C und 40 °C, und in Gegenwart eines säurebindenden Mittels, gegebenenfalls unter gleichzeitiger oder nachträglicher partieller Hydrolyse der Sulfochloridgruppen zu Sulfogruppen, umsetzt. Das Cyanamid wird dabei gegebenenfalls auch in Form seiner Salze, wie beispielsweise Mono- oder Dinatriumcyanamid oder Calciumcyanamid, eingesetzt.

Verbindungen der allgemeinen Formel (1), in welcher der Index c nicht gleich Null ist, können nach dem oben genannten erfindungsgemäßen Verfahren auch hergestellt werden, indem man erfindungsgemäß dieses in der Weise modifiziert, daß man vor, während oder nach der (den) Kondensationsreaktion(en) der Verbindungen der Formel (2) mit Cyanamid oder Cyanamid und den Verbindungen der Formel (3) einen Teil der Sulfonsäurechloridgruppen der Ausgangsverbindungen der Formel (2) durch Hydrolyse in Sulfonsäuregruppen überführt. So kann die Kondensation beispielsweise so durchgeführt werden, daß gleichzeitig mit der Umsetzung des Cyanamids und gegebenenfalls des Amins der Formel (3) ein Teil der Sulfonsäurechloridgruppen hydrolysiert wird, oder es kann so verfahren werden, daß zunächst mit einer zur vollständigen Umsetzung aller Sulfonsäurechloridgruppen nicht ausreichenden Menge an Cyanamid und gegebenenfalls an dem Amin der Formel (3) umgesetzt wird und daß anschließend die restlichen Sulfonsäurechloridgruppen durch einen besonderen Reaktionsschritt in saurem oder alkalischem Milieu, so bei einem pH-Wert zwischen 1 und 4 oder zwischen 8 und 12, gegebenenfalls in der Wärme, so bei Temperaturen zwischen 20 und 60 °C, hydrolysiert werden.

Die Verbindungen der Formel (1) werden in der Regel in Form ihrer Salze, bevorzugt in Form der Alkalimetallsalze, wie der Natrium- und Kaliumsalze, oder der Ammoniumsalze, erhalten oder hergestellt und finden als solche ihre Verwendung zum Färben von Fasermaterialien.

Die Umsetzung der Phthalocyaninsulfochloride der allgemeinen Formel (2) mit Cyanamid oder mit Cyanamid und einem Amin der allgemeinen Formel (3) wird bevorzugt in Wasser als Reaktionsmedium vorgenommen. Die Umsetzung kann aber auch in einem organischen Lösungsmittel durchgeführt werden, wobei solche Lösungsmittel bevorzugt sind, die mit Wasser mischbar sind, wie beispielsweise ein niederes Alkanol, wie Methanol und Äthanol, N-Methylpyrrolidon, Dimethylformamid und Dimethylsulfoxid, oder in Mischung von solchen Lösungsmitteln mit Wasser.

Die Umsetzung der Verbindungen der allgemeinen Formel (2) mit Cyanamid und gegebenenfalls einem Amin der allgemeinen Formel (3) erfolgt bei einer Temperatur zwischen − 10 °C und + 110 °C, wobei es vorteilhaft ist, die Reaktion bei einer niedrigen Temperatur, wie beispielsweise bei einer Temperatur zwischen − 10 °C und + 20 °C, insbesondere zwischen 0 °C und + 10 °C, zu beginnen und die Reaktion erst nach einem Teilumsatz durch Erhöhung der Temperatur auf 20 bis 50 °C, oder falls erforderlich, bis auf 110 °C, vorzugsweise auf etwa 100 °C, zu vervollständigen.

Säurebindende Mittel, die bei der erfindungsgemäßen Kondensationsreaktion zur Herstellung der Verbindungen der allgemeinen Formel (1) eingesetzt werden, sind bevorzugt Alkali- und Erdalkalihydroxide und basisch reagierende Salze der Alkali- und Erdalkalimetalle mit anorganischen oder organischen Säuren oder tertiäre organische Basen. Unter Alkalimetallen werden vorzugsweise Natrium und Kalium verstanden, unter Erdalkalimetallen vorzugsweise Calcium. Basisch reagierende Salze sind bevorzugt die Alkalimetallsalze der Kohlensäure, der Phosphorsäure und der Essigsäure, wie insbesondere Natrium- und Kaliumacetat, Natrium- und Kaliumbicarbonat, Natrium- und Kaliumcarbonat, Natriumdihydrogen-phosphat, Dinatrium-hydrogenphosphat, Trinatriumphosphat oder deren entsprechende Kaliumsalze.

Tertiäre organische Amine sind beispielsweise Pyridin, Triäthanolamin oder Dimethylanilin oder insbesondere Pyridinsulfonsäuren oder Pyridincarbonsäuren, bevorzugt Nicotinsäure.

Als Ausgangsverbindungen der Formel (2) finden beispielsweise Sulfonsäurechloride oder sulfogruppenhaltige Sulfonsäurechloride des metallfreien Phthalocyanins Verwendung, vorzugsweise jedoch solche von metallhaltigen Phthalocyaninen, wie beispielsweise Di-, Tri- oder Tetrasulfonsäurechloride des Kupferphthalocyanins, des Kobaltphthalocyanins oder Nickelphthalocyanins, so beispielsweise Kupferphthalocyanin-(3)-disulfonsäurechlorid, Kupferphthalocyanin-(3)-trisulfonsäurechlorid, Kupfer- oder Nickelphthalocyanin-(3)-tetrasulfonsäurechlorid, Kobaltphthalocyanin-(3)-trisulfonsäurechlorid, Kupferphthalocyanin-(4)-disulfonsäurechlorid oder Kupferphthalocyanin-(4)-tetrasulfonsäurechlorid, Kupferphthalocyanin-(3)-disulfonsäurechlorid-disulfonsäure, Kupferphthalocyanin-(3)-trisulfonsäurechlorid-monosulfonsäure, weiterhin analoge Sulfonsäurechloride, die am Phthalocyaninkern zusätzlich andere Substituenten, wie Phenylreste und Halogenatome, enthalten, so beispielsweise Sulfonsäurechloride von Tetraphenylkupferphthalocyanin oder Tetrachlor-nickelphthalocyanin. Die Sulfonsäurechloride der Formel (2) werden nach bekannten Verfahren hergestellt, beispielsweise nach dem Verfahren der deutschen Patentschrift 891 121.

Amine der Formel (3) sind beispielsweise Ammoniak, Methylamin, Äthylamin, n-Butylamin, Benzylamin, Anilin, Äthanolamin, Dimethylamin, Diäthylamin, Diisopropylamin, N-Methylbenzylamin, N-Methylanilin, Piperidin, Morpholin, Diäthanolamin, 2-Aminoäthan-1-sulfonsäure, 2-Aminoäthan-1-carbonsäure, 4-Aminobenzolcarbonsäure, 3-Aminobenzolsulfonsäure oder 4-Aminobenzolsulfonsäure.

Die Isolierung der nach dem vorstehend beschriebenen Verfahren erhaltenen Phthalocyaninverbindungen erfolgt in üblicher Weise durch Aussalzen, beispielsweise mit Natrium-, Kalium- oder Ammonium-chlorid, und/oder durch Ansäuren mit einer Mineralsäure oder durch Eindampfen von deren neutralen oder schwach sauren wäßrigen Lösungen, vorzugsweise bei mäßig erhöhter Temperatur und vermindertem Druck. Die erfindungsgemäßen Phthalcyaninverbindungen werden dementsprechend in Form ihrer Natrium-, Kalium- oder Ammoniumsalze oder in Säureform oder in einem Gemisch dieser Formen erhalten.

Die erfindungemäßen Phthalocyaninverbindungen eignen sich als Farbstoffe zum Färben und Bedrucken von Fasermaterialien aus Wolle, Seide, linearen Polyamiden, insbesondere jedoch aus hydroxygruppenhaltigen Materialien, wie Cellulose, beispielsweise Leinen, Regeneratcellulose und vor allem Baumwolle, ebenso von Papier, ferner von Leder. Bevorzugt werden sie in Form ihrer Ammoniumsalze als Farbstoffe verwendet.

Die Herstellung der Färbungen erfolgt in üblicher Weise in der Hitze als Fixiermedium und im neutralen oder sauren pH-Bereich, beispielsweise durch Direktfärben aus einer Färbeflotte, die gegebenenfalls neutrale anorganische Salze, wie beispielsweise Alkalichloride oder Alkalisulfate enthält, bei Raumtemperatur oder bei erhöhter Temperatur, beispielsweise zwischen etwa 40 und etwa 100 °C, und, gegebenenfalls nach einer Zwischentrocknung, durch anschließende Fixierung bei Temperaturen oberhalb 95 °C.

Verbindungen der allgemeinen Formel (1), — im folgenden als Farbstoffe bezeichnet, — die nur eine geringe Affinität zur Faser besitzen, werden vorteilhaft so appliziert, daß man das Fasermaterial mit einer wäßrigen Lösung des erfindungsgemäßen Farbstoffes, die gegebenenfalls neutrale anorganische Salze enthält, kalt oder bei mäßiger Temperatur imprägniert, abquetscht und die so aufgebrachten Farbstoffe, gegebenenfalls nach einer Zwischentrocknung, fixiert.

Die Fixierung erfolgt bei einer Temperatur zwischen 95 bis 220 °C, wobei die Wahl der Temperatur vom Material, falls es gegenüber sehr hohen Temperaturen oder heißer trockner Luft empfindlich ist, abhängen kann. Bevorzugt erfolgt die Fixierung durch Wasserdampf von einer Temperatur zwischen 100 und 160 °C oder durch trockne Luft (Thermofixierung) bei einer Temperatur zwischen 150 und 250 °C, wobei die Thermofixierung vorzugsweise bei Cellulosefasermaterialien angewendet wird.

Im Textildruck werden die erfindungsgemäßen Farbstoffe, gegebenenfalls unter Zusatz von gebräuchlichen Hilfsmitteln, wie beispielsweise Harnstoff oder Dispergiermitteln, in Wasser gelöst und mit Verdickungsmitteln, wie beispielsweise Methylcellulose oder Alginat-Verdickungen, zusammengerührt. Mit den so erhaltenen Pasten bedruckt man die Ware in üblicher Weise. Die Fixierung erfolgt dann durch Dämpfen oder Thermofixieren in der genannten und bekannten Weise.

Die erfindungsgemäßen Farbstoffe ergeben auf den vorstehend genannten Fasermaterialien sehr wertvolle, kräftige Färbungen und Drucke, die sich durch sehr gute Naßechtheiten und hervorragende Lichtechtheiten auszeichnen.

Die nachstehenden Beispiele dienen zur Erläuterung der Erfindung. Die Teile sind Gewichtsteile, die Angaben in Prozent sind Gewichtsprozent, sofern nichts anderes vermekt. Gewichtsteile verhalten sich zu Volumenteilen wie das Kilogramm zum Liter. Die Formelreste CuPc, NiPc und CoPc bedeuten das unsubstituierte Kupfer-, Nickel- bzw. Kobaltphthalocyanin-Gerüst.

Beispiel 1

In eine Lösung von 21 Teilen Cyanamid und 20 Teilen Natriumhydroxid in 700 Teilen Wasser trägt man unter gutem Rühren 97 Teile Kupferphthalocyanin-(3)-tetrasulfochlorid in Form eines feuchten Filterkuchens ein. Die Reaktion beginnt unter schwacher Wärmeentwicklung, und die Temperatur des Reaktionsgemisches steigt bis auf etwa 30 °C an. Durch fortlaufendes Zutropfen von etwa 155 Volumenteilen 2n-Natronlauge hält man den pH-Wert des Reaktionsgemisches bei 10. Die Reaktion ist nach etwa 6 Stunden beendet, was sich dadurch zeigt, daß keine Natronlauge mehr verbraucht wird ; es ist eine klare Lösung entstanden. Mit Salzsäure stellt man die Lösung neutral und dampft sie bei vermindertem Druck zur Trockne ein. Man erhält 143 Teile eines salzhaltigen türkisblauen Farbstoffpulvers, das das Natriumsalz der Verbindung der Formel

$$CuPc—(SO_2—NH—CN)_4$$

als Farbstoff zu 75 % enthält.

Die Verbindung der Formel $CuPc(SO_2NH—CN)_4$ läßt sich in dieser sauren Form erhalten, indem man die wäßrige Lösung des oben erhaltenen Natriumsalzes mit Salzsäure ansäuert, die ausgefallene Farbstoffsäure abfiltriert, gründlich mit verdünnter wäßriger Salzsäure wächst und unter vermindertem Druck trocknet. — Aus der so gewonnenen Farbstoffsäure kann man das Ammoniumsalz herstellen, indem man die Säure unter Zugabe von wäßriger Ammoniaklösung zur neutralen Reaktion in Wasser löst und diese Lösung unter vermindertem Druck zur Trockne eindampft.

Anwendung

30 Teile des Ammoniumsalzes der Verbindung der Formel $CuPc—(SO_2NH—CN)_4$ werden in 1 000 Teilen Wasser gelöst. Zur Vervollständigung des Färbebades wird noch ein für die Baumwollfärberei handelsübliches Netzmittel hinzugegeben. In diesem Färbebad behandelt man ein Baumwollgewebe bei einem Flottenverhältnis von 1 : 20 eine Stunde bei 95 °C.

Das Gewebe wird sodann aus dem Bad herausgenommen, abgequetscht, getrocknet und 2 Minuten bei 210 °C thermofixiert. Anschließend spült man es mit kaltem und mit heißem Wasser und zulezt mit einer kochenden schwachen Seifenlösung. Man erhält eine türkis-blaue Färbung mit guten Waschechtheiten und sehr guter Lichtechtheit.

Beispiel 1a

Zur Herstellung eines erfindungsgemäßen Farbstoffes verfährt man wie in Beispiel 1 beschrieben, setzt jedoch anstelle des Kupferphthalocyanin-(3)-tetrasulfochlorids ein anderes metallfreies oder metallhaltiges Phthalocyaninsulfochlorid ein, so beispielsweise Kupferphthalocyanin-(4)-tetrasulfochlorid, Nickelphthalocyanin-(3)-tetrasulfochlorid, Kobaltphthalocyanin-(3)-tetrasulfochlorid, Kupferphthalocyanin-(3)-trisulfochlorid, Kupferphthalocyanin-(3-disulfochlorid oder Phthalocyanin-(3)-tetrasulfochlorid.

Man erhält ebenfalls Farbstoffe, die, entsprechend der Verfahrensweise des Beispiels 1 auf Cellulosefasern appliziert und thermofixiert, türkisblaue Färbungen mit guten Echtheiten ergeben.

Beispiel 2

In eine Lösung von 8,4 Teilen Cyanamid und 8,0 Teilen Natriumhydroxid in 300 Teilen Wasser trägt man unter gutem Rühren 97 Teile Kupferphthalocyanin-(3)-tetrasulfochlorid in Form eines feuchten Filterkuchens ein. Durch die einsetzende Reaktion fällt der pH-Wert des reaktionsgemisches ab. Man hält ihn durch fortlaufende Zugabe von 2n-Natronlauge bei 10 und rührt das Reaktionsgemisch, bis kein Alkalihydroxid mehr verbraucht wird ; es sind hierfür etwa 310 Volumenteile 2n-Natronlauge erforderlich. Es ist eine tiefblaue Lösung entstanden. Zur Isolierung des gebildeten Farbstoffes säuert man mit 70 Teilen konzentrierter Salzsäure an und salzt ihn mit 200 Teilen Ammoniumchlorid aus. Man filtriert den Niederschlag ab, wäscht ihn gründlich mit verdünnter Salzsäure und trocknet ihn unter vermindertem Druck. Man erhält 96 Teile eines Farbstoffpulvers mit einem Farbstoffgehalt von 98 %. Die erhaltene Farbstoffverbindung hat, in Form der freien Säure geschrieben, die folgende Konstitution :

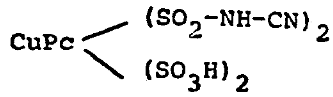

Die erhaltene Verbindung löst man in 1 200 Teilen Wasser unter Hinzufügen von 27 Teilen einer 25 %igen wäßrigen Ammoniaklösung und dampft die erhaltene Farbstofflösung unter vermindertem Druck zur Trockne ein. Man erhält 102 Teile des Ammoniumsalzes der obigen Phthalocyaninverbindung entsprechend der Formel

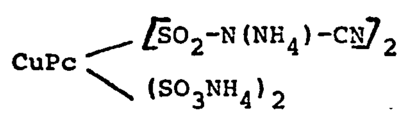

Anwendung

15 Teile dieses Ammoniumsalzes werden zusammen mit 20 Teilen Harnstoff in 200 Teilen heißem Wasser gelöst. Der intensiv türkis-blau gefärbten Lösung werden unter Rühren 400 Teile einer 4 %igen wäßrigen Natriumalginatverdickung zugegeben. Die so erhaltene Paste wird mit Wasser und Verdickung auf 1 000 Teile aufgefüllt. Mit der so hergestellten Druckpaste wird ein Baumwollgewebe bedruckt, getrocknet und sodann 2 Minuten bei 210 °C thermofixiert, anschließend mit kaltem und heißem Wasser gespült, kochend geseift, wieder mit Wasser gespült und getrocknet. Man erhält ein kräftiges türkis-blaues Druckmuster, das eine gute Lichtechtheit besitzt und gegenüber Waschbehandlungen sehr gut beständig ist.

Beispiel 3

In eine Lösung von 8,4 Teilen Cyanamid und 8,0 Teilen Natriumhydroxid in 500 Teilen Wasser trägt man unter gutem Rühren 97 Teile Kupferphthalocyanin-(3)-tetrasulfochlorid in Form eines feuchten Filterkuchens ein. Im Verlauf der einsetzenden Reaktion fällt der pH-Wert des Reaktionsgemisches ab, und man hält ihn durch Zutropfen von 2n-Natronlauge verbraucht sind, stoppt man die Natronlaugezugabe und hält weiterhin durch Zutropfen einer wäßrigen 2n-Ammoniaklösung den pH-Wert bei 10. Nach beendeter Reaktion scheidet man den gebildeten Farbstoff durch Ansäuern mit Salzsäure ab, filtriert ihn ab, wäscht ihn gründlich mit verdünnter Salzsäure und trocknet ihn unter vermindertem Druck. Man erhält 90 Teile Teile eines dunkelblauen Farbstoffpulvers, das 100 gew.-%ig an der Verbindung der Formel (in Form der freien Säure geschrieben)

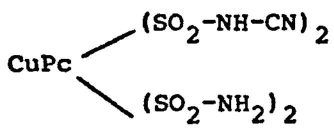

ist. Dieser Farbstoff läßt sich auf die in Beispiel 2 beschriebene Weise in sein Ammoniumsalz überführen. Gemäß der Verfahrensweise des Beispiels 2 erhält mah mit ihm ebenfalls türkis-blaue Baumwolldrucke von guter Lichtechtheit und guter Waschbeständigkeit.

Beispiel 3a

Verfährt man zur Herstellung eines erfindungsgemäßen Farbstoffes entsprechend der Verfahrensweise des Beispieles 3, setzt jedoch anstelle von wäßrigem Ammoniak eine wäßrige Lösung mit der äquivalenten Menge eines anderen primären oder sekundären aliphatischen oder aromatischen Amins ein, so beispielsweise Methylamin, Äthylamin, n-Butylamin, Benzylamin, Anilin, Äthanolamin, Dimethylamin, Diäthylamin, Di-isopropylamin, N-Methyl-benzylamin, N-Methyl-anilin, Piperidin, Morpholin, 2-Aminoäthan-1-carbonsäure, 2-Aminoäthan-1-sulfonsäure, 4-Amino-benzoesäure, 3-Amino-benzolsulfonsäure oder 4-Amino-benzosulfonsäure, und führt die Kondensationsreaktion in Abhängigkeit von der Basizität des verwendeten Amins bei einem pH-Wert zwischen 5 und 8,5 durch, so erhält man Farbstoffe entsprechend der allgemeinen Formel (1), mit denen grünstichig blaue bis türkis-blaue Färbungen auf Cellulosefasermaterial mit guten Wasch- und Lichtechtheiten hergestellt werden können.

Beispiel 4

Man verfährt zur Herstellung eines erfindungsgemäßen Farbstoffes entsprechend der Verfahrensweise des Beispieles 3, setzt jedoch bei der Kondensationsreaktion anstelle von Natronlauge als säurebindendes Mittel gleich zu Anfang eine wäßrige Ammoniaklösung tropfenweise zu und hält hierbei den pH-Wert bei 10. Man erhält einen Farbstoff, der, in Form der freien Säure geschrieben, die Formel

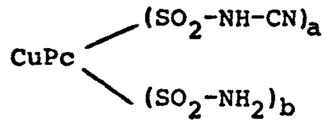

(a ist kleiner als 2 ; b ist größer als 2 ; a + b ist 4) besitzt und in Wasser etwas schwerer löslich ist als der Farbstoff des Beispieles 3. Er läßt sich gemäß der Verfahrensweise 1 auf Baumwollfasermaterial applizieren und fixieren und ergibt türkis-blaue Färbungen mit sehr guten Echtheitseigenschaften.

Beispiel 5

In eine Lösung von 42 Teilen Cyanamid und 80 Teilen Natriumhydroxid in 1 000 Teilen Wasser trägt man bei Raumtemperatur unter kräftigem Rühren 97 Teile Kupferphthalocyanin-(3)-tetrasulfochlorid ein. Die Temperatur steigt innerhalb kurzer Zeit auf etwa 30 °C an ; es entsteht eine tiefbraue Lösung. Nach Beendigung der Reaktion scheidet man den entstandenen Farbstoff durch Zugabe von Salzsäure oder wäßriger Schwefelsäure ab, filtriert ihn ab, wäscht ihn gründlich mit verdünnter Salzsäure und Trocknet ihn unter vermindertem Druck. Man erhält 92 Teile der Verbindung der Formel $CuPc(SO_2—NH—CN)_4$, die in ihren färberischen Eigenschaften dem Farbstoff des Beispieles 1 entspricht.

Beispiel 6

Zu einer Lösung von 25,8 Teilen Cyanamid in 250 Volumenteilen N-Methyl-pyrrolidon gibt man 50 Teile Natriumhydrogencarbonat, kühlt das Ganze auf 5 °C ab und trägt danach unter gutem Rühren im Verlauf von etwa 1 Stunde 97 Teile Kupferphthalocyanin-(3)-tetrasulfochlorid in Form eines feuchten Filterkuchens ein, ohne daß die Temperatur 10 °C übersteigt. Man rührt mehrere Stunden lang bei 10 °C und anschließend 12 Stunden bei Raumtemperatur nach. Das entstandene Farbstoffsalz wird durch Zugabe von n-Butanol vollständig ausgefällt, abfiltriert und mit Butanol und Äthanol gewaschen. Zur Überführung der erhaltenen Verbindung in die Säureform und zur Befreiung von anhaftendem Salz wird das Farbstoffprodukt mit verdünnter Salzsäure verrührt, abfiltriert, gründlich mit verdünnter Salzsäure gewaschen und bei vermindertem Druck getrocknet. Die Ausbeute beträgt 94 Teile der Verbindung der Formel $CuPc(SO_2—NH—CN)_4$ ; dieser Farbstoff entspricht in seinen Eigenschaften, insbesondere in Form des Alkalimetallsalzes, bevorzugt des Ammoniumsalzes, dem gemäß Beispiel 1 hergestellten Farbstoff.

Beispiel 7

63,5 Teile Calciumcyanamid (33 %ig bezogen auf Cyanamid, Molgewicht 42) werden mit 450 Teilen Wasser verrührt ; man trägt in die erhaltene Suspension 97 Teile Kupferphthalocyanin-(3)-tetrasulfochlorid in Form eines feuchten Filterkuchens ein. Die Reaktion beginnt unter schwacher Wärmeentwicklung, und die Temperatur des Reaktionsgemisches wird durch Auskühlung unterhalb 30 °C gehalten. Nach etwa 1 Stunde ist die Reaktion beendet ; es ist eine tiefblaue Lösung entstanden, die einen geringen Anteil ungelöste Nebenbestandteile enthalt. Man fügt eine Lösung von 90 Teilen Ammoniumcarbonat in 400 Teilen Wasser hinzu, filtriert nach kurzem Rühren von ausgefallenen Calciumcarbonat ab und dampft das Filtrat bei vermindertem Druck zur Trockne ein. Man erhält 128 Teile eines salzhaltigen blauen Farbstoffpulvers, welches das Ammoniumsalz der Verbindung der Formel

$$CuPc—(SO_2—NH—CN)_4$$

zu 83 % enthält.

**Ansprüche**

1. Wasserlösliche Phthalocyaninverbindungen der allgemeinen Formel (1)

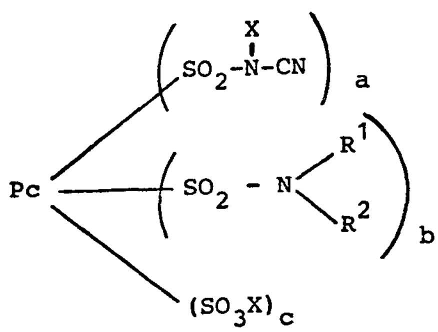

(1)

in welcher bedeuten :

Pc ist der Rest des metallfreien oder eines metallhaltigen Phthalocyanins, wobei der Phthalocyaninrest noch in den 3- und/oder 4-Stellungen der carbocyclischen aromatischen Ringe des Phthalocyanins substituiert sein kann, und in welchem die Sulfonylcyanamid-, Sulfonamid- und/oder Sulfonsäuregruppen in den 3- und/oder 4-Stellungen der carbocyclischen aromatischen Ringe des Phthalocyanins gebunden sind ;

X ist ein Wasserstoffatom ;

$R^1$ und $R^2$ bedeutet jedes ein Wasserstoffatom oder eine niedere Alkylgruppe, die substituiert sein kann, wobei $R^1$ und $R^2$ gleich oder verschieden voneinander sein können, oder

$R^1$ und $R^2$ bilden gemeinsam mit dem Stickstoffatom und einem Alkylenrest von 3-8 C-Atomen oder einem weiteren Heteroatom und zwei niederen Alkylenresten einen heterocyclischen Ring ;

a ist eine ganze oder gebrochene Zahl von 1 bis 4 ;

b ist eine ganze oder gebrochene Zahl von Null bis 3 ;

c ist eine ganze oder gebrochene Zahl von Null bis 3,

wobei a, b und c gleich oder verschieden voneinander sein können, jedoch die Summe von (a + b + c) gleich 1 bis 4 ist, und deren Salze.

2. Verbindungen der allgemeinen Formel (1) nach Anspruch 1, dadurch gekennzeichnet, daß X für Natrium, Kalium oder Ammonium steht.

3. Verfahren zur Herstellung der Verbindungen nach Anspruch 1, dadurch gekennzeichnet, daß man Phthalocyaninsulfochloride der allgemeinen Formel (2)

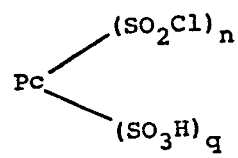

(2),

in welcher Pc die in Anspruch 1 genannte Bedeutung hat und n eine Zahl von 1 bis 4 und q eine ganze Zahl von Null bis 3, wobei die Summe von (n + q) gleich 1 bis 4 ist, mit Cyanamid oder deren Salzen oder mit Cyanamid oder deren Salzen und einem Amin der allgemeinen Formel (3)

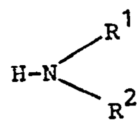

(3),

in welcher $R^1$ und $R^2$ die in Anspruch 1 genannten Bedeutungen haben, gleichzeitig oder in beliebiger Reihenfolge in wäßrigem Medium oder in einem organischen Lösungsmittel oder in einem Gemisch derselben bei einem pH-Wert von 4 bis 14 und bei einer Temperatur zwischen − 10 °C und + 110 °C und in Gegenwart eines säurebindenden Mittels, gegebenenfalls unter gleichzeitiger oder nachträglicher partieller Hydrolyse von Sulfochloridgruppen zu Sulfogruppen, umsetzt.

4. Verwendung der Phthalocyaninverbindungen nach Anspruch 1 als Farbstoffe.

5. Verwendung nach Anspruch 4 zum Färben und Bedrucken von Fasermaterialen aus Wolle, Seide, linearen Polyamiden, Leder und hydroxygruppenhaltigen Materialien.

**Claims**

1. Water-soluble phthalocyanine compounds of the general formula (1)

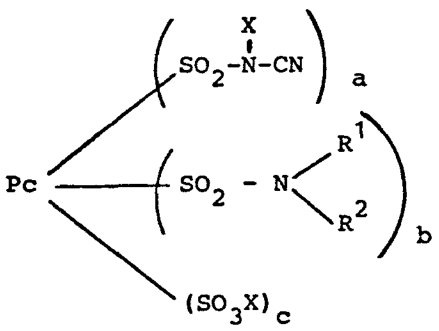

(1)

in which

Pc is the radical of the metal-free or of a metal-complex phthalocyanine, said phthalocyanine radical may be substituted in the 3- and/or 4-positions of the carbocyclic aromatic rings of the phthalocyanine, and the sulfonyl-cyanamide-, sulfonamide- and/or sulfonic acid groups are bound in the 3- and/or 4-positions of the carbocyclic aromatic rings of the phthalocyanine ;

X is a hydrogen atom ;

$R^1$ and $R^2$ each means a hydrogen atom, or a lower alkyl group which may be substituted,

$R^1$ and $R^2$ being identical or different from one another, or $R^1$ and $R^2$ form together with the nitrogen atom and an alkylene radical of 3 to 8 C-atoms or with another heteroatom and two lower alkylene radicals a heterocyclic ring ;

a is an integer or fractional number of from 1 to 4,

b is an integer or fractional number of from zero to 3,

c is an integer or fractional number of from zero to 3, with a, b and c being identical or different from one another, but the sum of (a + b + c) is from 1 to 4, and the salts of these compounds.

2. Compounds of the formula (1) according to Claim 1, characterized by that X is sodium, potassium or ammonium.

3. Process for the preparation of the compounds according to Claim 1, characterized by that phthalocyanine sulfochlorides of the general formula (2)

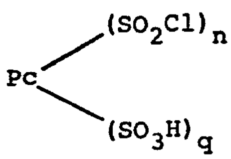

(2),

in which Pc has the meaning stated in Claim 1, and n is a number of from 1 to 4 and q is an integer of from zero to 3, the sum of (n + q) being from 1 to 4, are reacted, simultaneously or in any order, with cyanamide or the salts of cyanamide, or with cyanamide or the salts of cyanamide and an amine of the general formula (3)

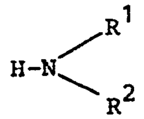

(3),

in which $R^1$ and $R^2$ have the meanings stated in Claim 1, in an aqueous medium or in an organic solvent or in a mixture of them, at a pH-value of from 4 to 14 and at a temperature between − 10 °C and + 110 °C and in the presence of an acid-binding agent, optionally with simultaneous or subsequent partial hydrolysis of sulfochloride groups to form sulfo groups.

4. Use of the phthalocyanine compounds according to Claim 1 as dyestuffs.

5. Use according to Claim 4 for dyeing and printing fibre materials made from wool, silk, linear polyamides, of leather and materials containing hydroxy groups.

**Revendications**

1. Composés phtalocyaniques hydrosolubles qui répondent à la formule générale 1

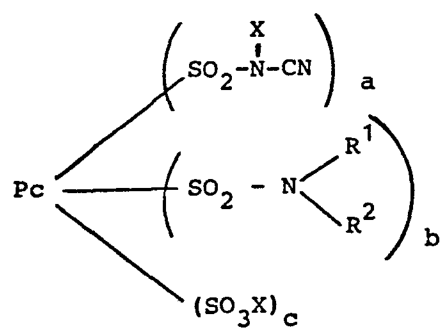

(1)

dans laquelle

Pc représente le radical de la phtalocyanine non métallisée ou d'une phtalocyanine métallisée, qui peut porter des substituants supplémentaires aux positions 3 et/ou 4 des noyaux aromatiques carbocycliques de la phtalocyanine et qui porte les groupes cyanamidosulfonyles, sulfamoyles et/ou sulfo aux positions 3 et/ou 4 des noyaux aromatiques carbocycliques de la phtalocyanine,

X représente un atome d'hydrogène,

$R^1$ ou $R^2$ représentent chacun un atome d'hydrogène ou un radical alkyle inférieur éventuellement substitué, $R^1$ et $R^2$ pouvant être identiques l'un à l'autre ou différents l'un de l'autre, ou

$R^1$ ou $R^2$ forment ensemble, avec l'atome d'azote et un radical alkylène contenant de 3 à 8 atomes de carbone, ou avec un autre hétéroatome et deux radicaux alkylènes inférieurs, un radical hétérocyclique,

a représente un nombre entier ou fractionnaire de 1 à 4,

b représente un nombre entier ou fractionnaire de 0 à 3 et

c représente un nombre entier ou fractionnaire de 0 à 3, a, b et c pouvant être identiques ou différents les uns des autres et la somme (a + b + c) étant un nombre de 1 à 4, ainsi que leurs sels.

2. Composés de formule générale 1 selon la revendication 1, caractérisés en ce que X représente le sodium, le potassium ou l'ammonium.

3. Procédé de préparation des composés selon la revendication 1, procédé caractérisé en ce qu'on fait réagir des phtalocyanine-sulfochlorures répondant à la formule générale 2

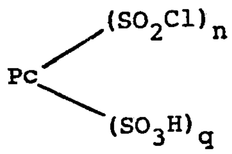

(2)

dans laquelle Pc a la signification donnée à la revendication 1, n désigne un nombre de 1 à 4 et q un nombre de 0 à 3, la somme (n + q) étant un nombre de 1 à 4, avec le cyanamide ou ses sels ou avec le cyanamide ou ses sels et une amine répondant à la formule générale 3

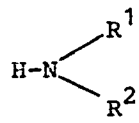

(3)

dans laquelle $R^1$ et $R^2$ ont les significations données à la revendication 1, en même temps ou dans l'ordre que l'on veut, en milieu aqueux ou dans un solvant organique ou encore dans un mélange de ceux-ci, à un pH de 4 à 14, à une température comprise entre − 10 et + 110 °C et en présence d'un accepteur d'acides, éventuellement avec hydrolyse partielle simultanée ou ultérieure de groupes chlorosulfonyles en groupes sulfo.

4. Application des composés phtalocyaniques selon la revendication 1 comme colorants.

5. Application selon la revendication 4 pour la teinture et l'impression de matières fibreuses en laine, en soie, en polyamides linéaires, en cuir et en matières contenant des groupes hydroxy.